# EUROPÄISCHE PATENTSCHRIFT

(11) **EP 3 212 915 B1**
(45) Veröffentlichungstag und Bekanntmachung des Hinweises auf die Patenterteilung: **09.12.2020**
(21) Anmeldenummer: 15785086.8
(22) Anmeldetag: 21.10.2015
(51) Int. Cl.: F02D 41/30, F02D 41/38, F02M 37/08, F02M 59/20, F02D 41/24, F02D 41/14, F04D 13/06, F04D 15/00, F04B 49/20, F02M 65/00

(54) **VORRICHTUNG UND VERFAHREN ZUM ERFASSEN EINES BETRIEBSDRUCKS EINER KRAFTSTOFFPUMPE FÜR EIN KRAFTFAHRZEUG**
DEVICE AND METHOD FOR SENSING AN OPERATING PRESSURE OF A FUEL PUMP FOR A MOTOR VEHICLE
DISPOSITIF ET PROCÉDÉ DE DÉTECTION D'UNE PRESSION DE FONCTIONNEMENT DE LA POMPE À CARBURANT D'UN VÉHICULE AUTOMOBILE

(30) Priorität: 31.10.2014 DE 102014222339
(43) Veröffentlichungstag der Anmeldung: 06.09.2017
(73) Patentinhaber: Vitesco Technologies GmbH, 30165 Hannover (DE)
(72) Erfinder: GRAF, Rolf, 61479 Glashütten (DE)
(86) Internationale Anmeldenummer: PCT/EP2015/074401
(87) Internationale Veröffentlichungsnummer: WO 2016/066500

(56) Entgegenhaltungen:
- EP-A2- 0 733 797
- WO-A1-2014/061233
- DE-A1- 4 446 277
- DE-A1-102008 018 603
- DE-A1-102010 064 181
- DE-A1-102011 087 041
- US-A1- 2011 238 282
- US-A1- 2014 105 758

## Beschreibung

Die vorliegende Erfindung betrifft eine Druckregelung und eine Medienkompensation durch Kalibrierung mit Druckschalter mit Hysterese. Insbesondere betrifft die vorliegende Erfindung eine Vorrichtung und ein Verfahren zum Erfassen eines Betriebsdrucks einer Kraftstoffpumpe für ein Kraftfahrzeug.

In modernen Kraftfahrzeugen soll aus Kostengründen auf einen Sensor für den Kraftstoffdruck verzichtet werden. Daher gibt es für die Motorsteuerung keine direkte Möglichkeit, durch eine Messung des Kraftstoffdrucks und einen Vergleich des gemessenen Kraftstoffdruckes mit abgespeicherten Vorgabewerten an die elektronische Pumpensteuerung auf den Zustand des Kraftstoffversorgungssystems zu schließen.

Aus der WO 2017084694 A1 ist eine Kraftstoffzufuhrvorrichtung zur Versorgung einer Brennkraftmaschine mit Kraftstoff bekannt, bei der ein eine Kraftstoffpumpe antreibender E-Motor kennfeldgesteuert betrieben wird.

Aus der WO 2014/061233 ist eine Vorrichtung zum Erfassen eines Betriebsdrucks einer Kraftstoffpumpe für ein Kraftfahrzeug bekannt.

Es ist eine Aufgabe der vorliegenden Erfindung, eine verbesserte Vorrichtung und ein verbessertes Verfahren zum Erfassen eines Betriebsdrucks einer Kraftstoffpumpe für ein Kraftfahrzeug bereitzustellen.

Diese Aufgabe wird durch die Gegenstände der unabhängigen Patentansprüche gelöst. Ausführungsformen und Weiterbildungen sind den abhängigen Patentansprüchen, der Beschreibung und den Figuren der Zeichnungen zu entnehmen.

Ein erster Aspekt der vorliegenden Erfindung betrifft eine Vorrichtung zum Erfassen eines Betriebsdrucks einer Kraftstoffpumpe für ein Kraftfahrzeug, wobei die Vorrichtung umfasst: eine Drehzahlerfassungseinrichtung, welche dazu ausgelegt ist, eine Drehzahl der Kraftstoffpumpe zu erfassen; eine Pumpenstromerfassungseinrichtung, welche dazu ausgelegt ist, einen elektrischen Pumpenantriebsstrom der Kraftstoffpumpe zu erfassen; eine Speichereinrichtung, welche dazu ausgelegt ist, ein Pumpenstrom-Drehzahl-Kennlinienfeld mit mindestens zwei durch eine Hysterese eines Druckschalters ermittelten Druckreferenzpunkten abzuspeichern; und eine Druckermittelungseinrichtung, welche dazu ausgelegt ist, basierend auf der erfassten Drehzahl, dem erfassten Pumpenantriebsstrom und dem abgespeicherten Pumpenstrom-Drehzahl-Kennlinienfeld einen in der Kraftstoffpumpe vorherrschenden Kraftstoffdruck zu ermitteln.

Nach einem weiteren, zweiten Aspekt der vorliegenden Erfindung wird eine Kraftstoffpumpe für ein Kraftfahrzeug bereitgestellt, wobei die Kraftstoffpumpe eine Vorrichtung nach dem ersten Aspekt der vorliegenden Erfindung oder nach einer beliebigen Ausführungsform des ersten Aspektes der vorliegenden Erfindung umfasst.

Nach einem weiteren, dritten Aspekt der vorliegenden Erfindung wird ein Verfahren zum Erfassen eines Betriebsdrucks einer Kraftstoffpumpe für ein Kraftfahrzeug bereitgestellt, wobei das Verfahren folgende Schritte umfasst: Erfassen einer Drehzahl der Kraftstoffpumpe mittels einer Drehzahlerfassungseinrichtung; Erfassen eines Pumpenstroms der Kraftstoffpumpe mittels einer Pumpenstromerfassungseinrichtung; Abspeichern eines Pumpenstrom-Drehzahl-Kennlinienfelds mit mindestens zwei durch eine Hysterese eines Druckschalters ermittelten Druckreferenzpunkten mittels einer Speichereinrichtung; und Ermitteln eines in der Kraftstoffpumpe vorherrschenden Kraftstoffdrucks basierend auf der erfassten Drehzahl, dem erfassten Pumpenstrom und dem abgespeicherten Pumpenstrom-Drehzahl-Kennlinienfeld mittels einer Druckermittelungseinrichtung.

Die vorliegende Erfindung ermöglicht vorteilhaft, die Verwendung eines Drucksensors durch eine intelligente Kennfeldauswertung zu ersetzen und dabei eine lokale Druckregelung ohne Drucksensor zu ermöglichen.

Ferner ermöglicht die vorliegende Erfindung vorteilhaft eine kennfeldgestützte Druckregelung und Begrenzung des Betriebsdrucks einer Kraftstoffpumpe.

Ferner ermöglicht die vorliegende Erfindung vorteilhaft, je zwei oder mehr zusätzliche Referenzpunkte für den Strangstrom der Kraftstoffpumpe bei zwei bekannten Drücken innerhalb des normalen Arbeitsbereiches der Kraftstoffpumpe zur Verfügung zu stellen. Dies erfolgt dabei ohne die Verwendung eines Referenzventils. Stattdessen ermöglicht die vorliegende Erfindung, dass ein kostengünstiger elektronischer oder elektrischer Druckschalter verwendet wird, wobei die Schalthysterese des Druckschalters dazu ausgenutzt wird, die mindestens zwei Referenzpunkte zu erfassen. Aufgrund seiner Schalthysterese umfasst der Druckschalter zwei unterschiedliche voneinander abweichende Schaltpunkte, welche vorteilhafterweise innerhalb eines normalen oder Standardarbeitsdruckbereiches liegen.

Besonders vorteilhaft ist es, wenn dieser Druckschalter bei einem Druck schaltet, der auch im Normalbetrieb des Kraftfahrzeugs jederzeit und willkürlich durch die Pumpensteuerung oder durch die Motorsteuerung angefahren werden kann. Zum Beispiel kann in einem typischen Kraftfahrzeug oder Personenkraftwagen der Arbeitsdruck der Kraftstoffpumpe innerhalb eines Druckbereiches von 2 bis 7 bar liegen, ein Kernarbeitsbereich der Kraftstoffpumpe kann in einem Druckbereich von 3 bis 6 bar liegen. Vorteilhaft wird bei Normalbetrieb von der vorliegenden Erfindung aus energetischen Gründen ein Betriebsdruck bzw. ein Kraftstoffdruck von 3 bar verwendet.

Bei Umgebungstemperaturen über einer gewissen Temperaturschwelle, beispielsweise über 25°C, wird beispielsweise der Systemdruck der Kraftstoffpumpe bis auf 6 bar gesteigert. Wenn der Druckschalter auf 5 bar mit einer Hysterese von 1 bar eingestellt ist, kann dieser Schaltpunkt in den meisten Zeiten des Normalbetriebes zyklisch-periodisch zur Referenzierung kurz angesteuert werden, ohne dass die Fahrleistung oder der Ausstoß von Kohlenstoffdioxid beeinflusst wird.

Idealerweise signalisiert das Kraftstoffpumpensteuergerät bzw. die Vorrichtung dem Motorsteuergerät der Brennkraftmaschine den Druckanstieg. Das Motorsteuergerät kann dann Maßnahmen ergreifen, dass die Verbrennungsparameter der Brennkraftmaschine unverändert bleiben. Zur Kalibrierung wird dann der Druck durch Drehzahlerhöhung kurzzeitig bis zum Schaltpunkt des Druckschalters von 5 bar erhöht und dann wieder reduziert bis zum Rückschaltpunkt des Druckschalters von beispielsweise 4 bar.

Für beide Punkte ist dann beispielsweise die jeweilige Drehzahl und der Pumpenstrom im Schaltmoment bekannt. Wird dieses Verfahren für zwei unterschiedliche Verbrauchspunkte der Brennkraftmaschine durchgeführt, so kann aus diesen Parametern die Steigung und die Spreizung des gesamten Kennlinienfeldes über den vordefinierten Drehzahlbereich ermittelt werden. Wird das Verfahren mit mehreren Drehzahlen in definierten Schritten wiederholt, kann auch eine Krümmung der Stromkurve ermittelt werden.

Die Druckregelung mit Überwachung des Druckschalters kann hierbei alleine innerhalb der Kraftstoffpumpenelektronik realisiert werden, alternativ kann die Druckregelung auch im Zusammenwirken mit einem beliebigen Steuergerät als regelnde Instanz ausgeführt werden. Weiterhin können auch hier bei verschiedenen Drehzahlen und auch kleine Änderungen der Drehzahl bei mehreren Schaltpunkten ermittelt werden. Diese repräsentieren dann die Linie konstanten Druckes über die Drehzahl der Pumpe. Alternativ kann bei der vorliegenden Erfindung zur Verwendung eines Druckschalters auch ein bestimmter Fahrzustand verwendet werden, bei dem sich die hydraulischen Bedingungen auf einen bestimmten Wert einstellen. Auch dieser Wert kann als eine Referenz im Arbeitsbereich verwendet werden.

Durch andere, gegebenenfalls im Kraftfahrzeug verfügbare Messwerte, wie beispielsweise Kraftstofftemperatur, Kraftstoffqualität, Einspritzvolumina und weitere Parameter, ist bei einem kalibrierten Kraftstoffsystem möglich, zusammen mit den im Kraftstoffpumpensteuergerät bzw. der Vorrichtung vorhandenen Information Drehzahl und Strangstrom eine Kalibrierung im Arbeitsbereich durchzuführen.

Die vorliegende Erfindung ermöglicht vorteilhaft die Verwendung eines Referenzschalters mit Hysterese für eine Nutzung von zwei oder mehr Arbeitspunkten der Brennkraftmaschine und der Kraftstoffpumpe zur Ermittlung von Steigung und gegebenenfalls der Krümmung der Stromkurven in einem Kennlinienfeld.

Die vorliegende Erfindung ermöglicht vorteilhaft eine Minimierung des Viskositätseinflusses auf die Genauigkeit der Druckmessung, eine Minimierung der Temperatureinflüsse auf die Viskosität des Kraftstoffes und indirekt damit auf die Druckregelung.

Ferner bietet die vorliegende Erfindung eine Möglichkeit, die lokale Regelung und den Systemschutz im Pumpensteuergerät vorzusehen. Dies bedeutet eine Entlastung der Motorsteuerung von der Druckregelfunktion.

Ferner ermöglicht die vorliegende Erfindung vorteilhaft, eine Parameterübergabe an das Motorsteuergerät mit zentraler Überwachung und Regelung vorzunehmen und eine Senkung der Systemkosten zu erreichen.

Vorteilhafte Ausgestaltungen der Erfindung sind in den Unteransprüchen gekennzeichnet.

In einer vorteilhaften Ausführungsform der vorliegenden Erfindung ist vorgesehen, dass die Vorrichtung ferner eine Regelungseinrichtung aufweist, welche dazu ausgelegt ist, basierend auf dem ermittelten Kraftstoffdruck eine Druckregelung für die Kraftstoffpumpe bereitzustellen.

In einer weiteren vorteilhaften Ausführungsform der vorliegenden Erfindung ist vorgesehen, dass die Vorrichtung dazu ausgelegt ist, die Kraftstoffpumpe in einem Umgebungsbereich des Arbeitspunktes des Druckschalters zu betreiben und durch eine Erhöhung der Drehzahl der Kraftstoffpumpe mindestens einen Schaltvorgang des Druckschalters auszulösen.

In einer weiteren vorteilhaften Ausführungsform der vorliegenden Erfindung ist vorgesehen, dass die Vorrichtung dazu ausgelegt ist, die Kraftstoffpumpe in einem Umgebungsbereich des Arbeitspunktes des Druckschalters zu betreiben und durch eine Erniedrigung der Drehzahl der Kraftstoffpumpe mindestens einen Schaltvorgang des Druckschalters auszulösen.

In einer weiteren Ausführungsform ist vorgesehen, dass die Vorrichtung dazu ausgelegt ist, weitere Druckreferenzpunkte des Pumpenstrom-Drehzahl-Kennlinienfelds zu ermitteln und ferner eine drehzahlabhängige Erhöhung des Volumenstroms der Kraftstoffpumpe zu ermitteln.

In einer weiteren vorteilhaften Ausführungsform ist vorgesehen, dass die Druckermittelungseinrichtung dazu ausgelegt ist, ferner basierend auf einer erfassten Kraftstofftemperatur oder einem erfassten, die Kraftstoffqualität beschreibenden Parameter oder einem erfassten Kraftstoffeinspritzvolumina den Kraftstoffdruck zu ermitteln.

In einer weiteren vorteilhaften Ausführungsform der vorliegenden Erfindung ist vorgesehen, dass die Druckermittelungseinrichtung dazu ausgelegt ist, ferner unter Ausnutzung eines Arbeitspunktes einer mit der Kraftstoffpumpe gekoppelten Brennkraftmaschine eine Steigung einer Stromkurve in dem Pumpenstrom-Drehzahl-Kennlinienfeld zu ermitteln.

In einer weiteren vorteilhaften Ausführungsform der vorliegenden Erfindung ist vorgesehen, dass die Druckermittelungseinrichtung dazu ausgelegt ist, ferner unter Ausnutzung eines Arbeitspunktes einer mit der Kraftstoffpumpe gekoppelten Brennkraftmaschine eine Krümmung einer Stromkurve in dem Pumpenstrom-Drehzahl-Kennlinienfeld zu ermitteln.

Die beschriebenen Ausgestaltungen und Weiterbildungen lassen sich beliebig miteinander kombinieren, wie in den beigefügten Ansprüchen definiert.

Weitere mögliche Ausgestaltungen, Weiterbildungen und Implementierungen der vorliegenden Erfindung umfassen auch nicht explizit genannte Kombinationen von zuvor oder im Folgenden bezüglich der Ausführungsbeispiele beschriebenen Merkmale der : Erfindung, wie in den beigefügten Ansprüchen definiert.

Die beiliegenden Zeichnungen sollen ein weiteres Verständnis der Ausführungsformen der vorliegenden Erfindung vermitteln. Die beiliegenden Zeichnungen veranschaulichen Ausführungsformen und dienen im Zusammenhang mit der Beschreibung der Erklärung von Konzepten der vorliegenden Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt. Es zeigen:
- Fig. 1:: eine schematische Darstellung einer Vorrichtung zum Erfassen eines Betriebsdrucks einer Kraftstoffpumpe für ein Kraftfahrzeug gemäß einer Ausführungsform der vorliegenden Erfindung;
- Fig. 2:: eine schematische Darstellung eines Flussdiagramms eines Verfahrens zum Erfassen eines Betriebsdrucks einer Kraftstoffpumpe für ein Kraftfahrzeug gemäß einer weiteren Ausführungsform der vorliegenden Erfindung;
- Fig. 3:: eine schematische Darstellung einer Kraftstoffpumpe gemäß einer weiteren Ausführungsform der vorliegenden Erfindung;
- Fig. 4:: eine schematische Darstellung eines PumpenstromDrehzahl-Kennlinienfeldes zur Erläuterung der vorliegenden Erfindung;
- Fig. 5:: eine schematische Darstellung eines PumpenstromDrehzahl-Kennlinienfeldes zur Erläuterung der vorliegenden Erfindung; und
- Fig. 6:: eine schematische Darstellung eines PumpenstromDrehzahldiagramms zur Erläuterung der vorliegenden Erfindung.

In den Figuren der Zeichnungen bezeichnen gleiche Bezugszeichen gleiche oder funktionsgleiche Elemente, Bauteile, Komponenten oder Verfahrensschritte, soweit nichts Gegenteiliges angegeben ist.

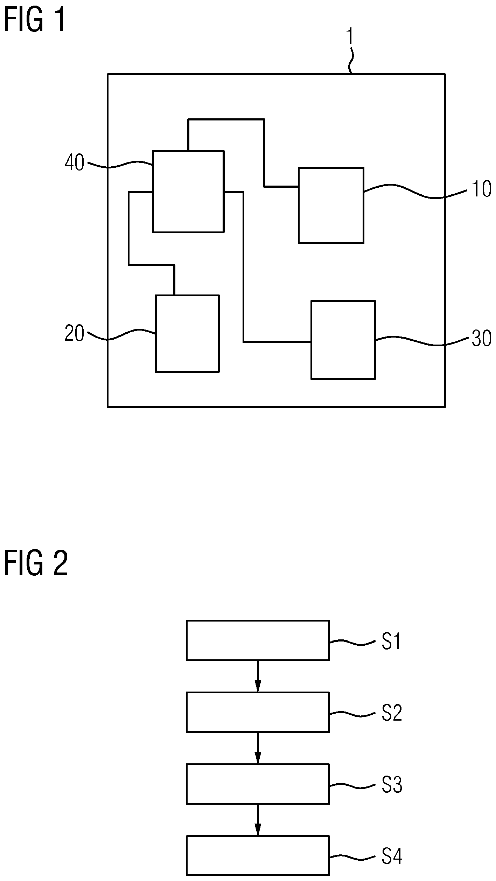

Die Fig. 1 zeigt eine Vorrichtung 1 zum Erfassen eines Betriebsdrucks einer Kraftstoffpumpe 100 für ein Kraftfahrzeug 2 gemäß einer vorteilhaften Ausführungsform der vorliegenden Erfindung.

Die Vorrichtung 1 umfasst beispielsweise eine Drehzahlerfassungseinrichtung 10, eine Pumpenstromerfassungseinrichtung 20, eine Speichereinrichtung 30 und eine Druckermittelungseinrichtung 40.

Ferner kann die Vorrichtung 1 auch eine Regelungseinrichtung 50 aufweisen. Die Drehzahlerfassungseinrichtung 10 ist beispielsweise dazu ausgelegt, eine Drehzahl der Kraftstoffpumpe 100 zu erfassen.

Die Pumpenstromerfassungseinrichtung 20 ist beispielsweise dazu ausgelegt, einen elektrischen Pumpenantriebsstrom der Kraftstoffpumpe zu erfassen.

Die Speichereinrichtung 30 ist beispielsweise dazu ausgelegt, ein Pumpenstrom-Drehzahl-Kennlinienfeld mit mindestens zwei durch eine Hysterese eines Druckschalters ermittelten Druckreferenzpunkten abzuspeichern.

Die Druckermittelungseinrichtung 40 ist beispielsweise dazu ausgelegt, basierend auf der erfassten Drehzahl dem erfassten Pumpenantriebsstrom und dem abgespeicherten Pumpenstrom-Drehzahl-Kennlinienfeld einen in der Kraftstoffpumpe vorherrschenden Kraftstoffdruck zu ermitteln.

Der in der Kraftstoffpumpe vorherrschende Kraftstoffdruck kann auch als Betriebsdruck der Kraftstoffpumpe bezeichnet werden. Die Regelungseinrichtung 50 kann beispielsweise dazu ausgelegt sein, basierend auf dem ermittelten Kraftstoffdruck eine Druckregelung für die Kraftstoffpumpe 100 bereitzustellen.

Hierfür kann die Regelungseinrichtung 50 beispielsweise dazu ausgebildet sein, eine Drehzahl der Kraftstoffpumpe 100 zu erhöhen.

Die Fig. 2 zeigt eine schematische Darstellung eines Flussdiagramms eines Verfahrens zum Erfassen eines Betriebsdrucks einer Kraftstoffpumpe gemäß einer weiteren Ausführungsform der vorliegenden Erfindung.

Das Verfahren zum Erfassen eines Betriebsdrucks einer Kraftstoffpumpe 100 für ein Kraftfahrzeug 2 kann dabei folgende Verfahrensschritte umfassen:
Als ein erster Schritt des Verfahrens erfolgt beispielsweise ein Erfassen S1 einer Drehzahl der Kraftstoffpumpe 100 mittels einer Drehzahlerfassungseinrichtung 10.

Als ein zweiter Schritt des Verfahrens erfolgt beispielsweise ein Erfassen S2 eines Pumpenstroms der Kraftstoffpumpe 100 mittels einer Pumpenstromerfassungseinrichtung 20.

Als ein dritter Schritt des Verfahrens erfolgt beispielsweise ein Abspeichern S3 eines Pumpenstrom-Drehzahl-Kennlinienfeldes mit mindestens zwei durch eine Hysterese eines Druckschalters ermittelten Druckreferenzpunkten mittels einer Speichereinrichtung 30.

Als ein vierter Schritt des Verfahrens erfolgt ein Ermitteln S4 eines in der Kraftstoffpumpe 100 vorherrschenden Kraftstoffdrucks basierend auf der erfassten Drehzahl, dem erfassten Pumpenstrom und dem abgespeicherten Pumpenstrom-Drehzahl-Kennlinienfeld mittels einer Druckermittelungseinrichtung 40.

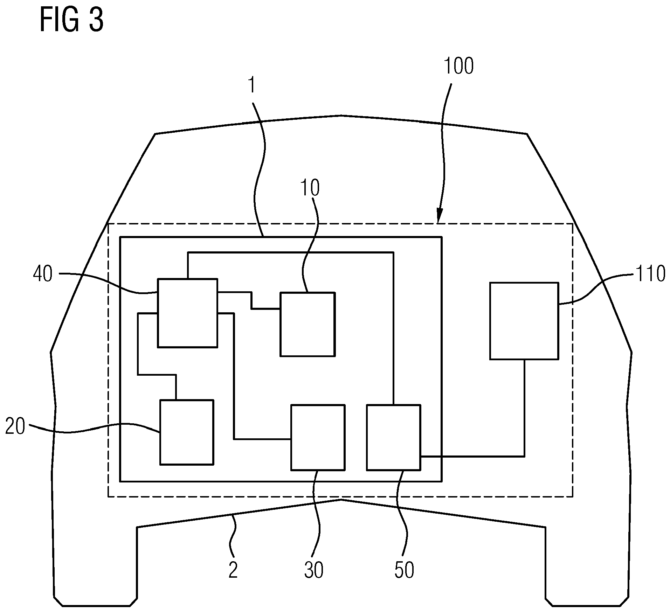

Die Fig. 3 zeigt eine schematische Darstellung einer Kraftstoffpumpe gemäß einer weiteren Ausführungsform der vorliegenden Erfindung.

Die Kraftstoffpumpe 100 kann auch als eine Ölpumpe, eine Wasserpumpe oder eine Fluidpumpe ausgebildet sein.

Die Kraftstoffpumpe bzw. Fluidpumpe 100 umfasst eine Vorrichtung 1 zum Erfassen eines Betriebsdrucks der Kraftstoffpumpe 100 für ein Kraftfahrzeug 2.

Eine Fluidpumpe 100 für ein Kraftfahrzeug 2 umfasst beispielsweise eine Vorrichtung 1 als Pumpensteuerungselektronik und eine elektrische Kraftmaschine 110.

Nach dieser Darstellung kann die Pumpensteuerungselektronik in die Kraftstoffpumpe integriert sein. Ferner kann die Pumpensteuerungselektronik in der Form der Vorrichtung 1 auch separat ausgebildet sein und mit der Kraftstoffpumpe 100 gekoppelt werden.

Ferner kann die Vorrichtung 1 eine Regelungseinrichtung 50 aufweisen, welche dazu ausgelegt ist, basierend auf dem ermittelten Kraftstoffdruck eine Druckregelung für die Kraftstoffpumpe 100 bereitzustellen und den Kraftstoffdruck bzw. Betriebsdruck in einem vorgebaren Druckbereich zu halten.

Hierzu kann die Regelungseinrichtung 50 mit der elektrischen Kraftmaschine 110 der Kraftstoffpumpe 100 gekoppelt werden.

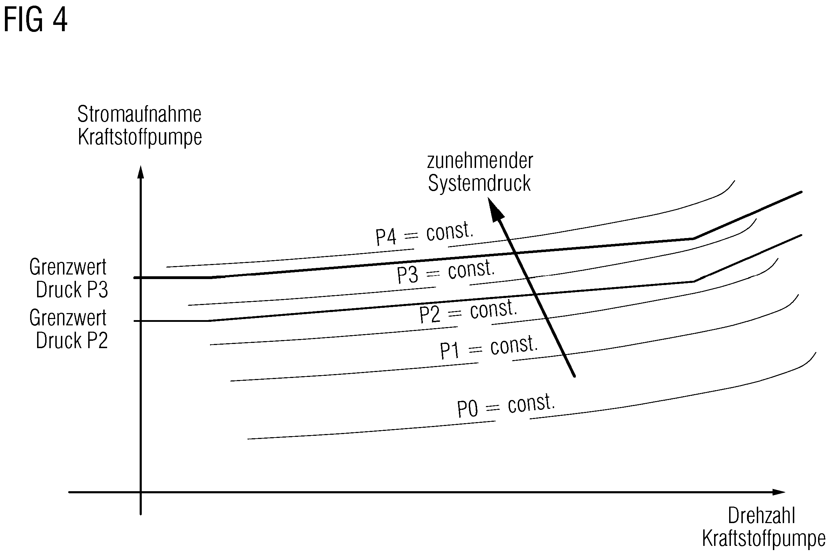

Die Fig. 4 zeigt eine schematische Darstellung eines Diagramms der Stromaufnahme über Drehzahl für eine Kraftstoffpumpe eines Kraftfahrzeugs zur Erläuterung der Erfindung.

Die druckabhängigen Stromkurven der Fig. 4 des Betriebskennlinienfeldes verändern sich über unterschiedliche Einflüsse. Das Feld der Stromkurven kann sich sowohl in seiner Position im Absolutwert als auch in der Spreizung und Drehung verändern. Das als Referenz benutzte Druckregelventil kann hierbei nur dazu benutzt werden, die Position des ganzen Kennfeldes im Absolutwert nachzuführen.

Dies kann zyklisch-periodisch durchgeführt werden, wenn es der Fahrzustand des Kraftfahrzeugs zulässt. Ein Atmen des Feldes, also eine Verschiebung der Kennlinienschar relativ zueinander, kann hierdurch nicht erfasst werden. Da das Referenzventil erst bei einem Druck öffnet, der im Normalbetrieb meist nicht erreicht wird, kann eine Abweichung der kleineren Drücke nicht erfasst werden.

Die Viskosität des Kraftstoffs beeinflusst auch die Stromaufnahme bei einer Kraftstoffpumpe. Insbesondere bei Strömungspumpen wird die Stromaufnahme mit steigender Drehzahl deutlich beeinflusst.

Die Werte für gängige Kraftstoffe können hier zu Differenzen in der Pumpenstromaufnahme von etwa 5 bis 8% für kleine Drehzahlen und 8 bis 18% für höhere Drehzahlen führen. In manchen Fällen werden auch Differenzen von bis zu 50% erreicht.

Damit ist die autonome Regelung des Kraftstoffdrucks über die Regelung des Pumpenstroms stark abhängig von der Viskosität des Mediums und indirekt auch von der Temperatur und wird auch entsprechend ungenau. In normalen Kraftfahrzeugen existiert typisch kein System für die Temperatur des Kraftstoffs im Tank oder die Viskosität, mit der ein solcher Einfluss realisiert werden könnte.

Kraftstoffe werden beispielsweise für den Endverbraucher entsprechend ihrer für die Brennkraftmaschine relevanten Mindesteigenschaften verkauft, beispielsweise Normal, Super, Super Plus und weitere Bezeichnungen. Die Maschinen in modernen Fahrzeugen können gegebenenfalls ein ganzes Spektrum von Kraftstoffen nutzen.

Die genaue chemische Zusammensetzung der Kraftstoffe kann hingegen variieren. Zum Beispiel kann der dem Kraftstoff beigemischte Anteil an Alkohol auch innerhalb einer Sorte stark schwanken.

Dies führt für ein reales Kraftstoffsystem zu Schwierigkeiten durch den Einfluss verschiedener chemischer Kraftstoffzusammensetzungen, die sich zum Teil erheblich in ihren physikalischen Eigenschaften, insbesondere der Viskosität, unterscheiden können.

Außerdem unterliegt gerade auch die Viskosität einem hohen Temperatureinfluss. Typischerweise ändert sich die Viskosität von Kraftstoffgemischen um ein bis zwei Größenordnungen für den im Kraftfahrzeug üblich auftretenden Temperaturbereich.

Die Fig. 4 zeigt eine schematische Darstellung der Stromaufnahme einer Kraftstoffpumpe über die Drehzahl, abhängig vom jeweiligen Systemdruck P0 bis P4.

Exemplarische Darstellungen der Grenzwertkurven P2 und P3 sind ferner in der Fig. 4 zu sehen, welche zum Beispiel Warnmeldungen oberhalb des höchsten zulässigen Systemdruck charakterisieren, beispielsweise exemplarisch zur Druckregelung herangezogen werden und eine Druckregelung zwischen den beiden Grenzwertkurven P2 und P3 ermöglichen.

Der Parameter der x-Achse "Drehzahl Kraftstoffpumpe" könnte für Pumpen mit bürstenbehafteten Motoren gegebenenfalls auch durch "Pumpenspannung" ersetzt werden, falls keine Drehzahlbestimmung über den Kommutatorstromrippel gemacht wird.

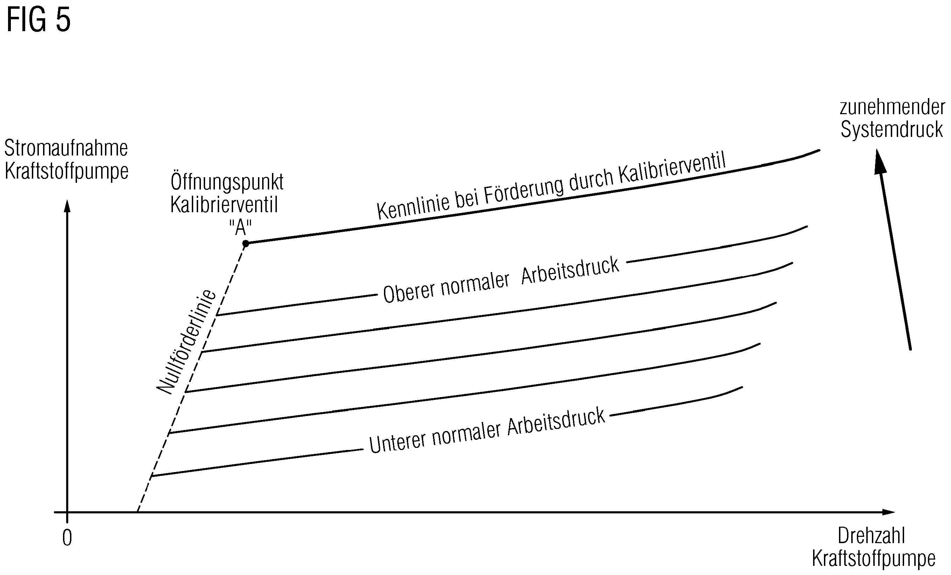

Die Fig. 5 zeigt eine schematische Darstellung eines Stromaufnahme/Drehzahldiagramms einer Kraftstoffpumpe für ein Kraftfahrzeug.

Die Fig. 5 zeigt eine schematische Darstellung der Kennlinie des Pumpenstroms über die Drehzahl bei Verwendung eines Referenzventils. Der Öffnungspunkt des Kalibrierventils "A" wird in einem bekannten Verfahren als Referenzwert ermittelt und zur Verbesserung der Systemgenauigkeit verwendet.

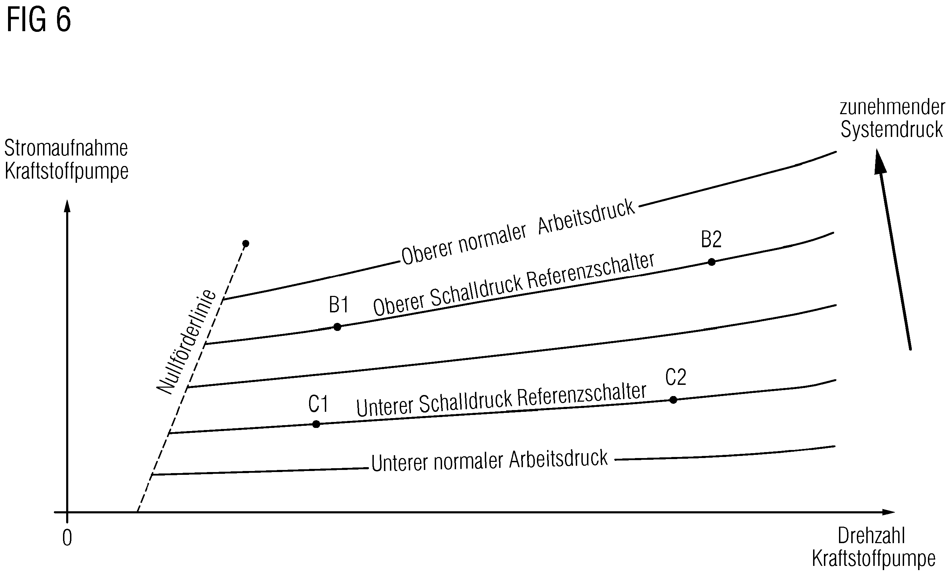

Die Fig. 6 zeigt eine schematische Darstellung eines Stromaufnahme/Drehzahldiagramms einer Kraftstoffpumpe für ein Kraftfahrzeug.

Die in Fig. 6 gezeigte schematische Darstellung zeigt ein Kennlinienfeld mit einer Vielzahl von Stromlinien des Pumpenstroms über die Drehzahl bei Verwendung eines Referenzschalters mit Hysterese.

Der Schaltpunkt "B1" eines Druckschalters wird durch momentane Erhöhung der Pumpendrehzahl bei einem bestimmten Arbeits- bzw. Verbrauchspunkt der Brennkraftmaschine erhalten.

Wenn die Pumpendrehzahl dann wieder von der Vorrichtung 1 reduziert wird, kann der Punkt C1 ermittelt werden. Die Punkte "B2" und "C2" werden äquivalent bei einem anderen Arbeits- bzw. Verbrauchspunkt der Brennkraftmaschine erhalten.

Die vorliegende Erfindung ermöglicht, zwei oder mehr zusätzliche Referenzpunkte für den Strangstrom der Kraftstoffpumpe bei zwei bekannten Drücken innerhalb des normalen Arbeitsbereichs zur Verfügung zu stellen. Dies erfolgt ohne die Verwendung eines Referenzventils.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar, wie in den beigefügten Ansprüchen definiert.

Ergänzend sei darauf hingewiesen, dass "umfassend" und "aufweisend" keine anderen Elemente oder Schritte ausschließt und "eine" oder "ein" keine Vielzahl ausschließt.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können, wie in den beigefügten Ansprüchen definiert. Bezugszeichen in den Ansprüchen sind nicht als Einschränkungen anzusehen.

## Patentansprüche

1. Vorrichtung (1) zum Erfassen eines Betriebsdrucks einer Kraftstoffpumpe (100) für ein Kraftfahrzeug, wobei die Vorrichtung umfasst:
- eine Drehzahlerfassungseinrichtung (10), welche dazu ausgelegt ist, eine Drehzahl der Kraftstoffpumpe (100) zu erfassen;
- eine Pumpenstromerfassungseinrichtung (20), welche dazu ausgelegt ist, einen elektrischen Pumpenantriebsstrom der Kraftstoffpumpe (100) zu erfassen;
- einen Druckschalter mit einer Hysterese;
- eine Speichereinrichtung (30), welche dazu ausgelegt ist, ein Pumpenstrom-Drehzahl-Kennlinienfeld mit mindestens zwei durch die Hysterese des Druckschalters ermittelten Druckreferenzpunkten abzuspeichern; und
- eine Druckermittelungseinrichtung (40), welche dazu ausgelegt ist, basierend auf der erfassten Drehzahl, dem erfassten Pumpenantriebsstrom und dem abgespeicherten Pumpenstrom-Drehzahl-Kennlinienfeld einen in der Kraftstoffpumpe (100) vorherrschenden Kraftstoffdruck zu ermitteln.

2. Vorrichtung nach Anspruch 1, wobei die Vorrichtung (1) ferner eine Regelungseinrichtung (50) aufweist, welche dazu ausgelegt ist, basierend auf dem ermittelten Kraftstoffdruck eine Druckregelung für die Kraftstoffpumpe (100) bereitzustellen.

3. Vorrichtung nach Anspruch 1 oder 2, wobei die Vorrichtung (1) dazu ausgelegt ist, die Kraftstoffpumpe in einem Umgebungsbereich des Arbeitspunktes des Druckschalters zu betreiben, und durch eine Erhöhung der Drehzahl der Kraftstoffpumpe (100) mindestens einen Schaltvorgang des Druckschalters auszulösen.

4. Vorrichtung nach einem der vorhergehenden Ansprüche 1 bis 3, wobei die Vorrichtung (1) dazu ausgelegt ist, die Kraftstoffpumpe in einem Umgebungsbereich des Arbeitspunktes des Druckschalters zu betreiben, und durch eine Erniedrigung der Drehzahl der Kraftstoffpumpe (100) mindestens einen Schaltvorgang des Druckschalters auszulösen.

5. Vorrichtung nach einem der vorhergehenden Ansprüche 1 bis 4, wobei die Vorrichtung (1) dazu ausgelegt ist, weitere Druckreferenzpunkte des Pumpenstrom-Drehzahl-Kennlinienfelds zu ermitteln und ferner eine drehzahlabhängige Erhöhung des Volumenstromes der Kraftstoffpumpe zu ermitteln.

6. Vorrichtung nach einem der vorhergehenden Ansprüche 1 bis 5, wobei die Druckermittelungseinrichtung (40) dazu ausgelegt ist, ferner basierend auf einer erfassten Kraftstofftemperatur, einem erfassten, die Kraftstoffqualität beschreibenden Parameter, einem erfassten Kraftstoffeinspritzvolumen den Kraftstoffdruck zu ermitteln.

7. Vorrichtung nach einem der vorhergehenden Ansprüche 1 bis 6, wobei die Druckermittelungseinrichtung (40) dazu ausgelegt ist, ferner unter Ausnutzung eines Arbeitspunktes einer mit der Kraftstoffpumpe gekoppelten Brennkraftmaschine eine Steigung einer Stromkurve in dem Pumpenstrom-Drehzahl-Kennlinienfeld zu ermitteln.

8. Vorrichtung nach Anspruch 7, wobei die Druckermittelungseinrichtung (40) dazu ausgelegt ist, ferner unter Ausnutzung eines Arbeitspunktes einer mit der Kraftstoffpumpe gekoppelten Brennkraftmaschine eine Krümmung einer Stromkurve in dem Pumpenstrom-Drehzahl-Kennlinienfeld zu ermitteln.

9. Kraftstoffpumpe (100) für ein Kraftfahrzeug (2), wobei die Kraftstoffpumpe (100) eine Vorrichtung (1) nach einem der vorhergehenden Ansprüche 1 bis 8 umfasst.

10. Verfahren zum Erfassen eines Betriebsdrucks einer Kraftstoffpumpe (100) für ein Kraftfahrzeug, wobei das Verfahren folgende Schritte umfasst:
- Erfassen (S1) einer Drehzahl der Kraftstoffpumpe (100) mittels einer Drehzahlerfassungseinrichtung (10);
- Erfassen (S2) eines elektrischen Pumpenantriebsstroms der Kraftstoffpumpe (100) mittels einer Pumpenstromerfassungseinrichtung (20);
- Abspeichern (S3) eines Pumpenstrom-Drehzahl-Kennlinienfelds mit mindestens zwei durch eine Hysterese eines Druckschalters ermittelten Druckreferenzpunkten mittels einer Speichereinrichtung (30); und
- Ermitteln (S4) eines in der Kraftstoffpumpe (100) vorherrschenden Kraftstoffdrucks basierend auf der erfassten Drehzahl, dem erfassten Pumpenantriebsstrom und dem abgespeicherten Pumpenstrom-Drehzahl-Kennlinienfeld mittels einer Druckermittelungseinrichtung (40).

## Claims

1. Apparatus (1) for the detection of an operating pressure of a fuel pump (100) for a motor vehicle, the apparatus comprising:
- a rotational speed detection device (10) which is designed to detect a rotational speed of the fuel pump (100);
- a pump current detection device (20) which is designed to detect an electric pump drive current of the fuel pump (100);
- a pressure switch with a hysteresis effect;
- a memory device (30) which is designed to store a pump current/rotational speed performance map with at least two pressure reference points which are determined by way of the hysteresis effect of the pressure switch; and
- a pressure determination device (40) which is designed to determine a fuel pressure which prevails in the fuel pump (100) in a manner which is based on the detected rotational speed, the detected pump drive current and the stored pump current/rotational speed performance map.

2. Apparatus according to Claim 1, the apparatus (1) having, furthermore, a regulation device (50) which is designed to provide a pressure regulation operation for the fuel pump (100) in a manner which is based on the determined fuel pressure.

3. Apparatus according to Claim 1 or 2, the apparatus (1) being designed to operate the fuel pump in a surrounding range of the operating point of the pressure switch, and to trigger at least one switching operation of the pressure switch by way of an increase in the rotational speed of the fuel pump (100).

4. Apparatus according to one of the preceding Claims 1 to 3, the apparatus (1) being designed to operate the fuel pump in a surrounding range of the operating point of the pressure switch, and to trigger at least one switching operation of the pressure switch by way of a decrease in the rotational speed of the fuel pump (100).

5. Apparatus according to one of the preceding Claims 1 to 4, the apparatus (1) being designed to determine further pressure reference points of the pump current/rotational speed performance map and, furthermore, to determine an increase in the volumetric flow of the fuel pump, which increase is dependent on the rotational speed.

6. Apparatus according to one of the preceding Claims 1 to 5, the pressure determination device (40) being designed, furthermore, to determine the fuel pressure in a manner which is based on a detected fuel temperature, a detected parameter which describes the fuel quality, and a detected fuel injection volume.

7. Apparatus according to one of the preceding Claims 1 to 6, the pressure determination device (40) being configured, furthermore, to determine a gradient of a current curve in the pump current/rotational speed performance map with utilization of an operating point of an internal combustion engine which is coupled to the fuel pump.

8. Apparatus according to Claim 7, the pressure determination device (40) being designed, furthermore, to determine a curvature of a current curve in the pump current/rotational speed performance map with utilization of an operating point of an internal combustion engine which is coupled to the fuel pump.

9. Fuel pump (100) for a motor vehicle (2), the fuel pump (100) comprising an apparatus (1) according to one of the preceding Claims 1 to 8.

10. Method for the detection of an operating pressure of a fuel pump (100) for a motor vehicle, the method comprising the following steps:
- detecting (S1) of a rotational speed of the fuel pump (100) by means of a rotational speed detection device (10);
- detecting (S2) of an electric pump drive current of the fuel pump (100) by means of a pump current detection device (20) ;
- storing (S3) of a pump current/rotational speed performance map with at least two pressure reference points which are determined by way of a hysteresis effect of a pressure switch, by means of a memory device (30); and
- determining (S4) of a fuel pressure which prevails in the fuel pump (100) by means of a pressure determination device (40) in a manner which is based on the detected rotational speed, the detected pump drive current and the stored pump current/rotational speed performance map.

## Revendications

1. Dispositif (1) de détection d'une pression de fonctionnement d'une pompe à carburant (100) destinée à un véhicule automobile, le dispositif comprenant :
- un moyen de détection de vitesse de rotation (10) qui est conçu pour détecter la vitesse de rotation de la pompe à carburant (100) ;
- un moyen de détection de courant de pompe (20) qui est conçu pour détecter un courant électrique d'entraînement de la pompe à carburant (100) ;
- un commutateur manométrique à hystérésis ;
- un moyen de mémorisation (30) qui est conçu pour mémoriser une famille de caractéristiques courant de pompe-vitesse de rotation comportant au moins deux points de référence de pression déterminés par l'hystérésis du commutateur manométrique à hystérésis ; et
- un moyen de détermination de pression (40) qui est conçu pour déterminer la pression de carburant, régnant dans la pompe à carburant (100), en fonction de la vitesse de rotation détectée, du courant d'entraînement de pompe détecté et de la famille de caractéristiques courant de pompe-vitesse de rotation mémorisée.

2. Dispositif selon la revendication 1, le dispositif (1) comprenant en outre un moyen de régulation (50) qui est conçu pour produire une régulation de pression de la pompe à carburant (100) en fonction de la pression de carburant déterminée.

3. Dispositif selon la revendication 1 ou 2, le dispositif (1) étant conçu pour faire fonctionner la pompe à carburant dans un voisinage du point de fonctionnement du commutateur manométrique, et pour déclencher au moins un processus de commutation du commutateur manométrique en augmentant la vitesse de la pompe à carburant (100).

4. Dispositif selon l'une des revendications précédentes 1 à 3, le dispositif (1) étant conçu pour faire fonctionner la pompe à carburant dans un voisinage du point de fonctionnement du commutateur manométrique, et pour déclencher au moins un processus de commutation du commutateur manométrique en réduisant la vitesse de rotation de la pompe à carburant (100).

5. Dispositif selon l'une des revendications 1 à 4 précédentes, le dispositif (1) étant conçu pour déterminer d'autres points de référence de pression de la famille de caractéristiques courant de pompe-vitesse de rotation et en outre pour déterminer une augmentation du débit volumique de la pompe à carburant en fonction de la vitesse de rotation.

6. Dispositif selon l'une des revendications 1 à 5 précédentes, le moyen de détermination de pression (40) étant conçu pour déterminer en outre la pression de carburant en fonction d'une température de carburant détectée, d'un paramètre détecté décrivant la qualité du carburant, d'un volume d'injection de carburant détecté.

7. Dispositif selon l'une des revendications 1 à 6 précédentes, le moyen de détermination de pression (40) étant conçu pour déterminer une pente d'une courbe de courant dans la famille de caractéristiques courant de pompe/vitesse de rotation à l'aide d'un point de fonctionnement d'un moteur à combustion interne accouplé à la pompe à carburant.

8. Dispositif selon la revendication 7, le moyen de détermination de pression (40) étant conçu pour déterminer en outre une courbure d'une courbe de courant dans la famille de caractéristiques courant de pompe-vitesse de rotation à l'aide d'un point de fonctionnement d'un moteur à combustion interne accouplé à la pompe à carburant.

9. Pompe à carburant (100) destiné à un véhicule automobile (2), la pompe à carburant (100) comprenant un dispositif (1) selon l'une des revendications 1 à 8 précédentes.

10. Procédé de détection de la pression de fonctionnement d'une pompe à carburant (100) destinée à un véhicule automobile, le procédé comprenant les étapes suivantes :
- détecter (S1) une vitesse de rotation de la pompe à carburant (100) à l'aide d'un moyen de détection de vitesse de rotation (10) ;
- détecter (S2) un courant électrique d'entraînement de la pompe à carburant (100) à l'aide d'un moyen de détection de courant de pompe (20) ;
- mémoriser (S3) à l'aide d'un moyen de mémorisation (30) une famille de caractéristiques courant de pompe-vitesse de rotation comprenant au moins deux points de référence de pression déterminés par une hystérésis d'un commutateur manométrique ; et
- déterminer (S4) à l'aide d'un moyen de détermination de pression (40) une pression de carburant, régnant dans la pompe à carburant (100), sur la base de la vitesse de rotation détectée, du courant d'entraînement de pompe détecté et de la famille de caractéristiques courant de pompe-vitesse de rotation mémorisée.
